# Europäisches Patentamt

# European Patent Office

# Office européen des brevets

(11) Publication number: **0 196 903**
**B1**

(12) **EUROPEAN PATENT SPECIFICATION**

(45) Date of publication of patent specification: **20.06.90**

(21) Application number: **86302366.9**

(22) Date of filing: **27.03.86**

(51) Int. Cl.⁵: **C 08 L 27/12, C 08 J 3/12 // (C08L27/12, 23:02)**

(54) Granular compositions based on fluoroelastomers.

(30) Priority: **29.03.85 IT 2016285**

(43) Date of publication of application: **08.10.86 Bulletin 86/41**

(45) Publication of the grant of the patent: **20.06.90 Bulletin 90/25**

(84) Designated Contracting States: **DE FR GB NL SE**

(56) References cited:
**GB-A-1 256 890**
**US-A-3 190 565**
**US-A-3 528 841**

(73) Proprietor: **AUSIMONT S.r.l.**
**31, Foro Buonaparte**
**I-20100 Milano (IT)**

(72) Inventor: **Arcella, Vincenzo**
**10, via Pansa**
**I-28100 Novara (IT)**
Inventor: **Bianchi, Gaetano**
**18, via Europa**
**I-20097 San Donato Milanese Milan (IT)**
Inventor: **D'Auria, Dionisio**
**52, via delle Abbadesse**
**I-20124 Milan (IT)**

(74) Representative: **Whalley, Kevin et al**
**MARKS & CLERK 57/60 Lincoln's Inn Fields**
**London WC2A 3LS (GB)**

Courier Press, Leamington Spa, England.

**Description**

The present invention relates to granular compositions based on fluoroelastomers, which compositions are flowable (free flowing).

More particularly, the invention relates to easy flowing granular compositions based on fluoroelastomers, particularly suited for being used in the production of films and other formed polyolefinic bodies.

As is known, in the production of polyolefinic films, such as linear low-density polyethylene films, there are used small quantities, in general 400—500 ppm, of fluoroelastomers as lubricating agents.

In general, there are prepared concentrated dispersions of fluoroelastomer in the polyolefin (master), such dispersions being admixed to the polymer during the film-forming stage or during the transformation into a formed body.

For the preparation of the "master" and with the purpose of obtaining homogeneous films, it is preferable to dispose of the elastomer in a granular shape with very small particles, such as from 0.1 to 2 mm. This requires the use of an anti-caking agent such as barium sulphate or calcium stearate, the quantity of which increases with the increasing of the specific surface area of the fluoroelastomer, the action of the anti-caking agent being of the superficial type.

On the other hand, the quantity of anti-caking agent cannot exceed certain limits of concentration or it would impart to the end product a polluting action and, thus, adversely influence its properties. Thus it follows that the size of the granules of fluoroelastomer cannot reach the values that are desired for an easy preparation of the master and for obtaining homogeneous films.

The present invention aims to provide an anti-caking agent for fluoroelastomer granules that overcomes or at least mitigates the above described drawbacks. More particularly, the invention aims to provide an anti-caking agent for fluoroelastomer granules that will not act as a pollutant of the polyolefin, so that it may be used also in relatively great quantities.

According to the present invention, there is used as an anti-caking agent a polyolefin in a powdery form and preferably the same polyolefin as is used for the production of the film or of any other formed body.

Thus, the present invention provides a flowable (free flowing) granular composition based on a fluoroelastomer containing, dispersed on its surface, as an anti-caking agent, from 5% to 70%, and preferably from 10 to 30%, by weight of a polyolefin in a powdery form.

The use of the polyolefin powder as an anti-caking agent does not exert any polluting action on the polymer since it is of the same type and, thus, allows fluoroelastomer granules to be obtained of extremely small dimensions, such as down to 0.1 mm.

The fluoroelastomers used in the granular compositions of the invention are those of conventional type, readily commercially available, and in particular the fluoroelastomers having a fluorine content greater than 65% by weight. Amongst the various known fluoroelastomers, those particularly suitable are the copolymers of vinylidene fluoride and hexafluoropropylene, developed on a commercial basis by Du Pont, by the 3M Company, by Montefluos S.p.A., by Daikin etc., and known under the respective trade marks Viton, Fluorel, Tecnoflon, Daiel; the vinylidene fluoride/hexafluoropropylene/tetrafluoroethylene terpolymers; the vinylidene fluoride/tetrafluoroethylene/perfluoromethyl-vinyl-ether terpolymers; the tetrafluoroethylene/propylene copolymers; the vinylidene fluoride/chloro-trifluoro-ethylene copolymers; the vinylidene fluoride/hydropentafluoropropylene copolymers; the vinylidene fluoride/hydropenta-fluoropropylene/tetrafluoroethylene terpolymers, etc. and the corresponding products containing in the chain small quantities of bromine, introduced, for example, in the form of trifluoro-bromo ethylene.

The polyolefin used in the present invention may be suitably any of low, high and medium density polyethylene; polypropylene; propylene-ethylene copolymers with a predominant content of propylene, both of the random type as well as of the block type, and mixtures thereof.

Low-density polyethylene and polypropylene are the preferred polyolefins for the preparation of the granular compositions of the present invention.

Together with the anti-caking agents used in the present invention, there may be used known anti-caking agents, such as barium sulphate, calcium stearate and talc.

The invention will be further described with reference to the following illustrative Examples. In the Examples all the parts are given by weight, unless otherwise specified.

### Examples 1 to 8

1 kg. of granulated fluoroelastomer with a particle size of about 2 mm, and consisting of 80 mols% of vinylidene fluoride and 20 mols% of perfluoropropylene (Tecnoflon produced by Montfluos S.p.A.) having a Mooney viscosity (at 100°C, 1+4 min.) of 80, were mixed together in a rotary blade mixer respectively with a low-density polyethylene, in an amount as specified in the Table below, and with polypropylene, likewise in an amount as specified in the Table below. The mixes were allowed to rest for 3 days, whereafter they were subjected to a visual examination. The observed results are given in the Table.

2

# EP 0 196 903 B1

TABLE

| Example | Anti-caking agent | Quantity | Aspect of the granules |
|---------|-------------------|----------|------------------------|
| 1 | low-density polyethylene | 0 | completely caked |
| 2 | low-density polyethylene | 2 | slightly caked |
| 3 | low-density polyethylene | 5 | not caked |
| 4 | low-density polyethylene | 10 | not caked |
| 5 | low-density polypropylene | 2 | slightly caked |
| 6 | low-density polypropylene | 5 | slightly caked |
| 7 | low-density polypropylene | 10 | not caked |
| 8 | low-density polypropylene | 15 | not caked |

As is apparent from the above, Examples 3, 4, 6, 7 and 8 are in accordance with the invention, whereas Examples 1, 2 and 5 are Comparative Examples.

## Example 9

There was used the same fluoroelastomer as in Example 1 but with a mean particle size of 0.5 mm; the elastomer was mixed with 30% by weight of low-density polyethylene.

There were prepared tubes of plastic laminate having a thickness of 0.2 mm and containing 340 ml of the fluoroelastomer admixed with the anti-caking agent. At the two ends of the tube there were placed a disk of plastic laminate which was non-deformable under heat and which had a diameter of 60 mm. These disks serve to manufacture a cylindrical test piece having the two bases parallel to each other.

The tubes were put for 3 days in a chamber having a temperature of 25°C and pressurized at an absolute pressure of $14.7 \cdot 10^4$ Pa (1.5 kg/cm²).

The caking tendency of the sample was measured with a system which measured the caking index I as the sum of IC + CS, where

IC is the breaking charge index expressed as the value, in kg, of the strength necessary to crush the test piece by compression; and

IS is the crumbling index, expressed as the value in seconds, of the time used for crumbling the test piece introduced in a rotating screen with sieve openings of 5 mm and containing 5 steel spheres having a diameter of 2 cm.

According to this system, there is the following correlation:

I < 10          Excellent resistance to caking

I = 11—30     good resistance to caking

I = 31—50     poor resistance to caking

I > 50          bad resistance to caking

The test conducted on the test piece containing the anti-caking agent according to the present invention gave a caking tendency I of 16. The same test conducted on a test piece containing the fluoroelastomer without anti-caking agent gave a caking tendency much higher than 50.

## Example 10

Example 9 was repeated with the same fluoroelastomer containing as anti-caking agents 20% by weight of low-density polyethylene and 1% by weight calcium stearate. The caking tendency of the sample was 14.

## Claims

1. A free-flowing granular composition based on a fluoroelastomeric copolymer of fluoro-olefin containing dispersed on its surface an anti-caking agent, characterized in that the said anti-caking agent is a polyolefin in a powdery form, in an amount from 5 to 70% by weight.

3

2. A granular composition as claimed in claim 1, characterized in that the fluoroelastomer has a fluorine content greater than 65% by weight.

3. A granular composition as claimed in claim 1 or 2, characterized in that the fluoroelastomer is selected from vinylidene fluoride and hexafluoropropylene copolymers; vinylidene fluoride, hexafluoropropylene and tetrafluoroethylene terpolymers; vinylidene fluoride, tetrafluoroethylene and perfluoromethyl-vinyl-ether terpolymers; tetrafluoroethylene and propylene copolymers; vinylidene fluoride and chloro-trifluoroethylene copolymers; vinylidene fluoride and hydropentafluoropropylene and tetrafluoroethylene terpolymers, and corresponding products containing in the chain small quantities of bromine.

4. A granular composition as claimed in any of claims 1 to 3, characterized in that the polyolefin is selected from low, medium and high-density polyethylene, polypropylene, propylene-ethylene copolymers with a predominant content of propylene, both of the random type as well as of the block type, and mixtures thereof.

5. A granular composition as claimed in any of claims 1 to 3, characterized in that the polyolefin is a low-density polyethylene.

6. A granular composition as claimed in any of claims 1 to 3, characterized in that the polyolefin is polypropylene.

7. A granular composition as claimed in any of claims 1 to 6, characterized in that, in addition to the polyolefin, there is used another anti-caking agent.

8. A granular composition as claimed in claim 7, characterized in that the said another anti-caking agent is barium sulphate, calcium stearate or talc.

9. A granular composition as claimed in any of claims 1 to 8, characterized in that the said polyolefin anti-caking agent is in an amount of from 10 to 30% by weight.

10. Use in the production of polyolefin film of from 400 to 500 ppm of a free-flowing granular fluoroelastomer, said fluoroelastomer containing dispersed on its surface as an anti-caking agent a polyolefin in powdery form in an amount from 5 to 70% by weight.

**Patentansprüche**

1. Fließfähige körnige Zusammensetzung auf Basis eines fluorelastomeren Copolymeren eines Fluorolefins, die auf der Oberfläche ein das Zusammenbacken verhinderndes Mittel dispergiert enthält, dadurch gekennzeichnet, daß das ein Zusammenbacken verhindernde Mittel ein Polyolefin in pulverförmiger Form in einer Menge von 5 bis 70 Gewichtprozent ist.

2. Körnige Zusammensetzung nach Anspruch 1, dadurch gekennzeichnet, daß das Fluorelastomer einen Fluorgehalt von mehr als 65 Gewichtsprozent hat.

3. Körnige Zusammensetzung nach Anspruch 1, dadurch gekennzeichnet, daß das Fluorelastomer ausgewählt ist aus Vinyldenfluorid-Hexafluorpropylen-Copolymeren; Vinylidenfluorid-Hexafluorpropylen-Tetrafluorethylen-Terpolymeren; Vinylidenfluored-Tetrafluorethylen-Perfluormethylvinylether-Terpolymeren; Tetrafluorethylen-Propylen-Copolymeren; Vinylidenfluorid-Chlortrifluorethylen-Copolymeren; Vinylidenfluorid-Hydropentafluorpropylen-Copolymeren; Vinylidenfluorid-Hydropentafluorpropylen-Tetrafluorethylen-Terpolymeren und entsprechenden Produkten, die in der Kette geringe Menge Brom enthalten.

4. Körnige Zusammensetzung nach irgendeinem der Ansprüche 1 bis 3, dadurch gekennzeichnet, daß das Polyolefin ausgewählt ist aus Polyethylen von niedriger, mittlerer und hoher Dichte, Polypropylen, Propylen-Ethylen-Copolymeren mit überwiegendem Propylenanteil, sowohl vom stratischen als auch vom Blocktyp, und Mischungen davon.

5. Körnige Zusammensetzung nach irgendeinem der Ansprüche 1 bis 3, dadurch gekennzeichnet, daß das Polyolefin ein Polyethylen von niedriger Dichte ist.

6. Körnige Zusammensetzung nach irgendeinem der Ansprüche 1 bis 3, dadurch gekennzeichnet, daß das Polyolefin Polypropylen ist.

7. Körnige Zusammensetzung nach irgendeinem der Ansprüche 1 bis 6, dadurch gekennzeichnet, daß zusätzlich zu dem Polyolefin ein weiteres das Zusammenbacken verhinderndes Mittel verwendet wird.

8. Körnige Zusammensetzung nach Anspruch 7, dadurch gekennzeichnet, daß daß das weitere ein Zusammenbacken verhindernde Mittel Bariumsulfat, Calciumstearat oder Talkum ist.

9. Körnige Zusammensetzung nach irgendeinem der Ansprüche 1 bis 8, dadurch gekennzeichnet, daß das ein Zusammenbacken verhindernde Polyolefin in einer Menge von 10 bis 30 Gewichtsprozent vorhanden ist.

10. Verwendung von 400 bis 500 ppm eines fließfähigen körnigen Fluorelastomers bei der Herstellung von Polyolefinfolien, wobei das Fluorelastomer ein Polyolefin in pulverförmiger Form in einer Menge von 5 bis 70 Gewichtsprozent als ein Zusammenbacken verhinderndes Mittel auf seiner Oberfläche dispergiert enthält.

**Revendications**

1. Une composition granulaire à écoulement libre à base de copolymère fluoroélastomère d'une fluorooléfine contenant à l'état de dispersion à sa surface, un agent anti-mottage, caractérisé par le fait que ledit agent anti-mottage est une polyoléfine sous forme pulvérulente, utilisée en une proportion de 5 à 70% en poids.

2. Une composition granulaire comme définie dans la revendication 1, caractérisé par le fait que le fluoroélastomère a une teneur en fluor supérieure à 65% en poids.

3. Une composition granulaire comme définie dans la revendication 1 ou 2, caractérisé par le fait que le fluoroélastomère est choisi parmi: les copolyméres fluorure de vinylidéne/hexafluoropropylène; les terpolymères fluorure de vinylidène/hexyfluoropropylène/tétrafluoroéthylène; les terpolymères fluorure de vinylidène/tétrafluoroéthylène/perfluoro-vinylèther; les copolymères tétrafluoroéthylène/propylène; les copolymères fluorure de vinylidène/chloro-trifluoroéthylène; les copolymères fluorure de vinylidène/ hydropentafluoropropylène; les terpolymères fluorure de vinylidène/hydropentafluoropropylène/ tétrafluoroéthylène, et les produits correspondants contenant dans la chaîne de petites quantités de brome.

4. Une composition granulaire comme définie dans l'une quelconque des revendications 1 à 3, caractérisé par le fait que la polyoléfine est choisie parmi les polyéthylènes, les polypropylènes, les copolymères propylène-éthylène avec une prédominance de propylène, qu'ils soient du type aléatoire ou du type séquencé, à faible, moyenne, ou haute densité, et les mélanges en dérivant.

5. Une composition granulaire comme définie dans l'une quelconque des revendications 1 à 3, caractérisé par le fait que la polyoléfine est un polyéthylène faible densité.

6. Une composition granulaire comme définie dans l'une quelconque des revendications 1 à 3, caractérisé par le fait que la polyoléfine est du polypropylène.

7. Une composition granulaire comme définie dans l'une quelconque des revendications précédentes, caractérisée par le fait que, en plus de la polyoléfine, est utilisé un autre agent anti-mottage.

8. Une composition granulaire comme définie dans la revendication 7, caractérisée par le fait que ledit autre agent anti-mottage est le sulfate de baryum, le stéarate de calcium ou le talc.

9. Une composition granulaire comme définie dans l'une quelconque des revendications 1 à 8, caractérisé par le fait que ladite polyoléfine formant agent anti-mottage, est employée dans une proportion de 10 à 30% en poids.

10. L'utilisation dans la production de film en polyoléfine de 400 à 500 ppm d'un fluoroélstomère granulaire à écoulement libre, ledit fluoroélastomère contenant à l'état de dispersion à sa surface, en tant qu'agent anti-mottage, une polyoléfine sous forme pulvérulente utilisée en une proportion de 5 à 70% en poids.